# EUROPÄISCHE PATENTSCHRIFT

(11) **EP 0 830 960 B1**
(45) Veröffentlichungstag und Bekanntmachung des Hinweises auf die Patenterteilung: **14.12.2005**
(21) Anmeldenummer: 97114711.1
(22) Anmeldetag: 26.08.1997
(51) Int. Cl.: B60G 21/055, B60G 9/00, B60G 21/05, B60G 7/00

(54) **Archsaufhängung für Fahrzeuge**
Axle suspension for vehicles
Suspension d'essieu pour véhicules

(30) Priorität: 19.09.1996 DE 19638082
(43) Veröffentlichungstag der Anmeldung: 25.03.1998
(73) Patentinhaber: Otto Sauer Achsenfabrik Keilberg, 63856 Bessenbach-Keilberg (DE)
(72) Erfinder: Frey, Christopher, Dr.-Ing., 63768 Hoesbach (DE)
(74) Vertreter: KEIL & SCHAAFHAUSEN Patentanwälte

(56) Entgegenhaltungen:
- EP-A- 0 386 377
- EP-A- 0 389 363
- EP-A- 0 458 665
- EP-A- 0 600 198
- FR-A- 2 545 422
- US-A- 4 352 509
- US-A- 5 375 871

## Beschreibung

Die Erfindung bezieht sich auf eine Aufhängung für eine einen starren vorzugsweise rohrförmigen Achskörper aufweisende Fahrzeugachse, mit wenigstens je einem Führungslenker beidseits der Fahrzeuglängsmittelebene, welcher mit seinem Vorderende an einem chassisfesten Lagerpunkt angelenkt und im Abstand davon starr mit dem Achskörper verschweißt ist.

Eine derartige Achsaufhängung ist aus der EP-A-0 600 198 bekannt. Hierbei ist ein rohrförmiger Achskörper mit einheitlicher Wandstärke derart durch kreisförmige Öffnungen des Führungslenkers hindurchgeführt, daß der Achskörper vollständig von der jeweiligen Achskörperwandung umgeben ist. Auf dem Achsrohr mit durchgehend einheitlicher Wandstärke kann im Bereich der Durchführung des Achsrohres durch den Führungslenker eine aus zwei Halbschalen bestehende Hülse aufgesetzt sein, welche über Lochschweißung mit dem Achsrohr verbunden ist. Eine derartige Achsaufhängung erfordert einen erheblichen Montageaufwand, da nicht nur das Achsrohr durch die geschlossenen Öffnungen des Führungslenkers hindurchgesteckt, sondern auch noch Verstärkungshülsen mit vier umlaufenden Schweißungen vorgesehen werden müssen.

Aufgabe der vorliegenden Erfindung ist es, eine Achsaufhängung der eingangs genannten Art so auszugestalten, daß sie bei gleicher Zuverlässigkeit einen geringeren Herstellungs- und Montageaufwand erfordert.

Diese Aufgabe wird erfindungsgemäß bei einer Achsaufhängung der eingangs genannten Art dadurch gelöst, daß der Führungslenker den Achskörper nicht vollständig, aber mindestens um 180° umgreift, daß der Achskörper über eine Schweißnaht mit dem Führungslenker verbunden ist und daß die Schweißnaht über den gesamten an den Achskörper angrenzenden Rand des Führungslenkers umläuft.

Die am Rand zwischen Führungslenker und Achskörper umlaufende Schweißnaht gewährleistet eine spannungsfreie sichere Befestigung des Achskörpers an dem Führungslenker. Wenn der Führungslenker den Achskörper um 180° umgreift, braucht der Achskörper nicht durch den Führungslenker hindurchgesteckt zu werden, vielmehr kann er z. B. von unten in die Aussparungen des Führungslenkers eingefügt und mit diesem verschweißt werden.

In vorteilhafter Weiterbildung des Erfindungsgedankens ist der Achskörper rohrförmig und weist im Bereich der Schweißnaht mit dem Führungslenker einen verstärkten Wandbereich auf. Dadurch ist der Materialfluß des Achsrohres optimal, weil die Wandstärke variabel den Spannungsverhältnissen anpaßbar ist. Aufgrund geringer Spannungen im Achsrohr ist es somit möglich, auch in der Zugzone und der Druckzone des Achsrohres zu schweißen, also oben und unten. Derartige Schweißungen sind mit herkömmlichen Achsrohren problematisch, weil die Gefahr des Reißens der Achsrohrwandung besteht. Der verstärkte Wandbereich kann unter jeder der Achseinspannungen wenigstens einen Ringbereich des Achskörpers ausmachen. Dabei kann der verstärkte Wandbereich entweder dadurch gebildet sein, daß der Außendurchmesser des Achskörpers über seine Länge im wesentlichen konstant ist oder der Innendurchmesser.

In weiterer besonderer Ausgestaltung des Erfindungsgedankens ist der Führungslenker im wesentlichen kastenförmig ausgebildet und weist eine Bodenwand und zwei senkrechte den Achskörper im Abstand voneinander teilweise umgreifende Seitenwände auf. Für diesen Fall läuft die Schweißnaht vorzugsweise am Rand der Seitenwände und der Bodenwand des Führungslenkers durchgehend um. Auf diese Weise erhält man eine Achsaufhängung mit Führungslenkern geringen Gewichts aber hinreichender Steifigkeit.

Eine weitere Erhöhung der Stabilität kann erreicht werden, wenn beidseits der jeweiligen Seitenwand eine Schweißnaht umläuft.

In der Praxis hat sich eine Ausführungsform bewährt, bei welcher der Führungslenker den Achskörper um etwa 270° umgreift.

Hierbei ist es von besonderem Vorteil, wenn die an dem Achskörper angrenzende Öffnung des Führungslenkers, an welcher dieser den Achskörper nicht umgreift, in dem Führungslenker, insbesondere in den Seitenwänden, in Pfadrichtung vor dem Achskörper liegt.

In der Öffnung des Führungslenkers, insbesondere dessen Seitenwand, ist dann Platz für Bauteile der Fahrzeugbremse. Insbesondere können in einer solchen Öffnung Scheibenbremsen mit axial angeordneten Bremszylindern Platz finden. Dort ist der Bremszylinder optimal geschützt.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung auch unabhängig von ihrer Zusammenfassung in Ansprüchen oder deren Rückbeziehung.

Es zeigen:
- Fig. 1: schematisch in Schrägansicht eine die Erfindung aufweisende Achsaufhängung im Bereich der Verbindung des Achskörpers mit einem Führungslenker, und
- Fig. 2a und 2 b: eine teilweise geschnittene Seitenansicht von außen bzw. von innen einer weiteren Ausgestaltung einer erfindungsgemäßen Achsaufhängung.

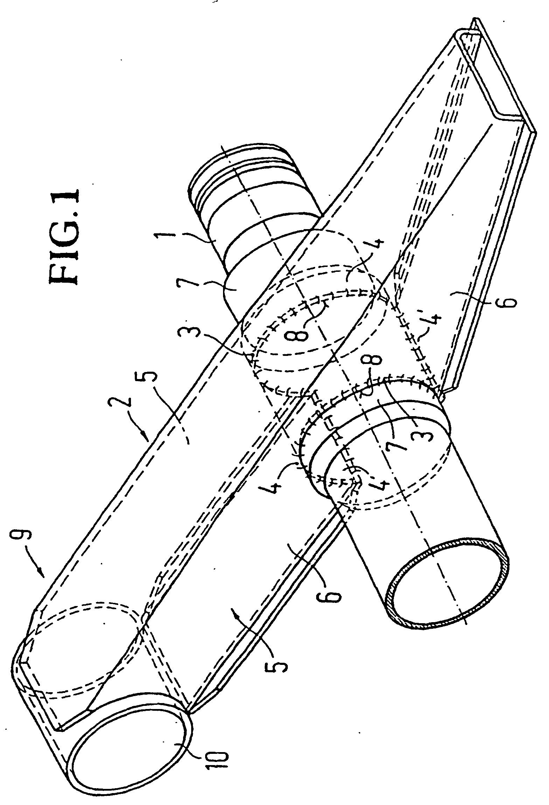

Gemäß Fig. 1 weist die Fahrzeugachse einen starren rohrförmigen Achskörper 1 auf. Zur Aufhängung der Fahrzeugachse ist auf jeder Seite der Fahrzeuglängsmittelebene mindestens ein Führungslenker 2 vorgesehen, welcher in dem dargestellten Fall im wesentlichen kastenförmig mit senkrechten Seitenwänden 5 und einer Bodenwand 6 ausgebildet ist. Der Führungslenker 2 ist mit seinem vorderende 9 über eine Lagerbuchse 10 an einem (in Fig. 1 nicht dargestellten) chassisfesten Lager 11 des Fahrzeugs angelenkt. Im Abstand hinter dem Lager 11 ist der Führungslenker 2 starr mit dem Achskörper 1 verschweißt. Zu diesem Zweck umgibt der Führungslenker 2, d.h. umgeben die Seitenwände 5 des Führungslenkers 2, den Achskörper 1 jeweils nicht vollständig, sondern nur mindestens um 180°, und zwar in der Art, daß die Aussparungen 8 in den Seitenwänden 5, in welche der Achskörper 1 paßt, nach unten offen sind. Der Achskörper 1 ist über eine Schweißnaht 3 mit dem Führungslenker 2 verbunden. Die Schweißnaht 3 läuft über den gesamten an den Achskörper 1 angrenzenden Rand 4, 4' des Führungslenkers 2 um. Die einzige Schweißnaht 3 hat dabei zwei Umfangsabschnitte im Bereich der umlaufenden Ränder 4 der Seitenwände 5 sowie zwei die ersteren verbindenden Axialabschnitte im Bereich der achsparallelen Ränder 4' der Bodenwand 6 des Führungslenkers 2.

Der rohrförmige Achskörper 1 weist im Bereich der umlaufenden Schweißnaht 3 einen verstärkten Wandbereich 7 auf. Bei der in Fig. 1 dargestellten Ausführung ist zu dem Zweck der Außendurchmesser des Achskörpers 1 im Bereich der Schweißnaht 3 gegenüber dem Außendurchmesser in den übrigen Abschnitten des Achskörpers 1 vergrößert, während der Innendurchmesser über die gesamte Länge des Achskörpers 1 gleich groß ist. Es ist aber auch möglich, den Außendurchmesser über die Länge des rohrförmigen Achskörpers 1 konstant zu halten, während der Innendurchmesser im Bereich der Schweißnaht 3 gegenüber den übrigen Achskörperabschnitten verringert ist.

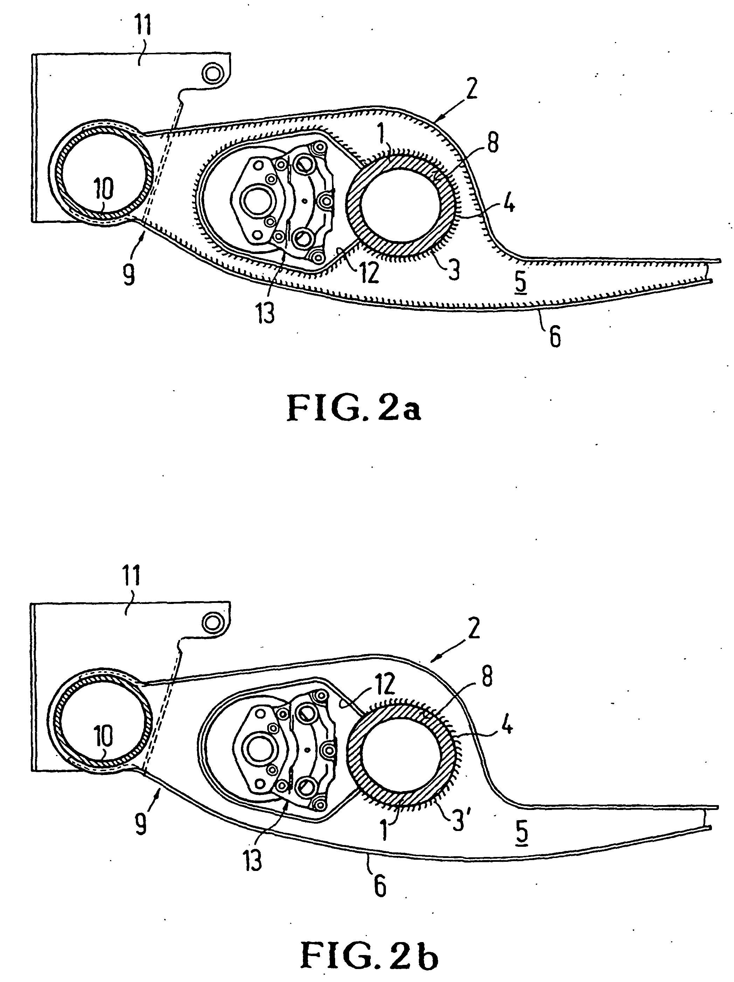

Bei der in den Figuren 2 a und 2 b dargestellten Ausführungsform läuft auf dem an den Achskörper 1 angrenzenden Rand 4 sowohl eine Schweißnaht 3 auf der Außenseite als auch eine Schweißnaht 3' auf der Innenseite der Seitenwand 5 des Führungslenkers 2 um, wobei hier der Führungslenker 2 den Achskörper 1 um etwa 270° umgreift. Die an den Achskörper 1 angrenzende Öffnung 12 des Führungslenkers 2 liegt in dessen Seitenwänden 5 in Fahrtrichtung vor dem Achskörper 1. In die Öffnung 12 der Seitenwand 5 können Bauteile der Fahrzeugbremse 13 raumsparend und geschützt untergebracht werden. In den Figure 2 a und 2b ist auch gezeigt, wie die Führungslenker 2 über die Lagerbuchse 10 jeweils an einem chassisfesten Lagerbock 11 im Abstand von dem Achskörper 1 angelenkt sein können.

### Bezugszeichen

- 1: Achskörper
- 2: Führungslenker
- 3,3': Schweißnaht
- 4: Rand
- 5: Seitenwände
- 6: Bodenwand
- 7: verstärkter Wandbereich
- 8: Aussparungen
- 9: Vorderende
- 10: Lagerbuchse
- 11: Lager
- 12: Öffnung
- 13: Bremse

## Patentansprüche

1. Aufhängung für eine einen starren Achskörper (1) aufweisende Fahrzeugachse, mit wenigstens je einem Führungslenker (2) beidseits der Fahrzeuglängsmittelebene, welcher mit seinem Vorderende (9) an einem chassisfesten Lager (11) angelenkt und im Abstand davon starr mit dem Achskörper (1) verschweißt ist, **dadurch gekennzeichnet, daß** der Führungslenker (2) den Achskörper (1) nicht vollständig, aber mindestens um 180° umgreift, daß der Achskörper (1) über eine Schweißnaht (3) mit dem Führungslenker (2) verbunden ist und daß die Schweißnaht (3) über den gesamten an den Achskörper (1) angrenzenden Rand (4) des Führungslenkers (2) umläuft.

2. Achsaufhängung nach Anspruch nach Anspruch 1, **dadurch gekennzeichnet, daß** der Achskörper (1) rohrförmig ist, aber im Bereich der Schweißnaht (3) mit dem Führungslenker (2) einen verstärkten Wandbereich (7) aufweist.

3. Achsaufhängung nach Anspruch 1 oder 2, **dadurch gekennzeichnet, daß** der Führungslenker (2) im wesentlichen kastenförmig ausgebildet ist sowie eine Bodenwand (6) und zwei den Achskörper (1) im Abstand voneinander teilweise umgreifende senkrechte Seitenwände (5) aufweist.

4. Achsaufhängung nach Anspruch 3, **dadurch gekennzeichnet, daß** die Schweißnaht (3) an dem an dem Achskörper (1) teilweise angrenzenden Rand (4, 4') der Seitenwände (5) und der Bodenwand (6) durchgehend umläuft.

5. Achsaufhängung nach Anspruch 3 oder 4, **dadurch gekennzeichnet, daß** beidseits der jeweiligen Seitenwand (5) eine Schweißnaht (3,3') umläuft.

6. Achsaufhängung nach einander Ansprüche 1 bis 5, **dadurch gekennzeichnet, daß** der Führungslenker (2) den Achskörper (1) um etwa 270° umgreift.

7. Achsaufhängung nach einem der Ansprüche 1 bis 6, **dadurch gekennzeichnet, daß** die an den Achskörper (1) angrenzende Öffnung (12) des Führungslenkers (2), an welcher dieser den Achskörper (1) nicht umgreift, in dem Führungslenker (2), insbesondere in dessen Seitenwände (5), in Fahrtrichtung vor dem Achskörper (1) liegt.

8. Achsaufhängung nach Anspruch 7, **dadurch gekennzeichnet, daß** in der Öffnung (12) des Führungslenkers (2), insbesondere dessen Seitenwand (5), Bauteile der Fahrzeugbremse (13) untergebracht sind.

## Claims

1. Suspension for a vehicle axle having a rigid axle body (1), with at least one radius arm (2) on each side of the longitudinal median plane of the vehicle, said radius arm (2) being linked at its front end (9) to a bearing (11) fixed to the chassis and, at a distance therefrom, being rigidly welded together with the axle body (1), **characterized in that** the radius arm (2) does not fully surround the axle body (1) but surrounds it at least by 180°, **in that** the axle body (1) is joined by a welded seam (3) to the radius arm (2) **and in that** the welded seam (3) extends around the entire edge (4) of the radius arm (2) where it adjoins the axle body (1).

2. Axle suspension according to Claim 1, **characterized in that** the axle body (1) is tubular in form, but has a reinforced wall area (7) in the region where the welded seam (3) joins it to the radius arm (2).

3. Axle suspension according to Claim 1 or 2, **characterized in that** the radius arm (2) is substantially box-shaped as well as having a base wall (6), and two vertical side walls (5) which are located a distance apart from one another and partly surround the axle body (1).

4. Axle suspension according to Claim 3, **characterized in that** the welded seam (3) extends continuously around the edge (4, 4') of the side vla1ls (5) and base wall (6) where they partly adjoin the axle body (1).

5. Axle suspension according to Claim 3 or 4, **characterized in that** a welded seam (3, 3') runs round on both sides of the respective side wall (5).

6. Axle suspension according to one of Claims 1 to 5, **characterized in that** the radius arm (2) surrounds the axle body (1) by approximately 270°.

7. Axle suspension according to one of Claims 1 to 6, **characterized in that** the opening (12) - adjoining the axle body (1) - of the radius arm (2), where the latter does not surround the axle body (1), is located in the radius arm (2), particularly in its side walls (5), in front of the axle body (1) in direction of travel.

8. Axle suspension according to Claim 7, **characterized in that** housed in the opening (12) of the radius arm (2), particularly its side wall (5), are components of the vehicle brake (13).

## Revendications

1. Suspension pour un axe de véhicule présentant un corps d'essieu (1) rigide, avec au moins de chacun des deux côtés du plan médian longitudinal du véhicule une bielle de poussée (2) qui est articulée avec sont extrémité avant (9) sur un palier (11) fixé sur le châssis et qui est soudée rigidement à distance de là au corps d'essieu (1), **caractérisée en ce que** la bielle de poussée (2) ne recouvre pas entièrement mais seulement sur au moins 180° le corps d'essieu (1), **en ce que** le corps d'essieu (1) est relié à la bielle de poussée (2) par un cordon de soudure (3), et **en ce que** le cordon de soudure (3) fait le tour complet du bord (4) de la bielle de poussée (2) adjacent au corps d'essieu (1).

2. Suspension d'essieu selon la revendication 1, **caractérisée en ce que** le corps d'essieu (1) est tubulaire mais présente au niveau du cordon de soudure (3) avec la bielle de poussée (2) un domaine de paroi renforcé (7).

3. Suspension d'essieu selon la revendication 1 ou 2, **caractérisée en ce que** la bielle de poussée (2) a essentiellement la forme d'un caisson et présente une paroi de fond (6) et deux parois latérales verticales (5) entourant partiellement le corps d'essieu (1) à distance l'une de l'autre.

4. Suspension d'essieu selon la revendication 3, **caractérisée en ce que** le cordon de soudure (3) fait le tour de façon continue le long du bord (4, 4') des parois latérales (5) et de la paroi inférieure (6) partiellement adjacent au corps d'essieu (1).

5. Suspension d'essieu selon la revendication 3 ou 4, **caractérisée en ce qu'**un cordon de soudure (3, 3') s'étend des deux côtés de chacune des parois latérales (5).

6. Suspension d'essieu selon l'une des revendications 1 à 5, **caractérisée en ce que** la bielle de poussée (2) entoure le corps d'essieu sur environ 270°.

7. Suspension d'essieu selon l'une des revendications 1 à 6, **caractérisée en ce que** l'ouverture (12) de la bielle de poussée adjacente au corps d'essieu (1), dans laquelle ouverture celle-ci n'entoure pas le corps d'essieu (1), est située dans la bielle de poussée (1), notamment dans ses parois latérales (5), devant le corps d'essieu (1) par rapport au sens de la marche.

8. Suspension d'essieu selon la revendication 7, **caractérisée en ce que** des composants du système de freinage (13) sont placés dans l'ouverture (12) de la bielle de poussée (2), notamment de sa paroi latérale (5).
